# EUROPÄISCHE PATENTSCHRIFT

(11) **EP 2 597 887 B1**
(45) Veröffentlichungstag und Bekanntmachung des Hinweises auf die Patenterteilung: **23.08.2017**
(21) Anmeldenummer: 11009276.4
(22) Anmeldetag: 23.11.2011
(51) Int. Cl.: H04Q 1/14

(54) **Verbindungsmodul**
Connecting module
Module de raccordement

(43) Veröffentlichungstag der Anmeldung: 29.05.2013
(73) Patentinhaber: CobiNet Fernmelde- und Datennetzkomponenten GmbH, 68542 Heddesheim (DE)
(72) Erfinder: Krey, Cornelius, 69469 Weinheim (DE); König, Uwe, 69207 Sandhausen (DE)
(74) Vertreter: Kunst, Manuel Nikolaus Johannes

(56) Entgegenhaltungen:
- WO-A2-2004/036927
- US-A1- 2004 233 593

## Beschreibung

Die Erfindung betrifft ein Verbindungsmodul für die Fernmelde- und Datentechnik mit Kontaktelementen, welche bei Kontaktierung von Adern einer Kabel- und einer Rangierseite des Moduls an dessen beabstandeten, einander gegenüberliegenden Stirnflächen Aderenden der Adern verbinden, wobei die Kontaktelemente in einem Modulgehäuse aufgenommen sind und in Richtung der Quererstreckung des Moduls nebeneinander angeordnete, je einer Seite eines Kontaktelements zugeordnete Klemmschlitze eine Klemmleiste bilden, in welche Klemmschlitze die Aderenden zur Kontaktierung einführbar sind, wobei das Modulgehäuse in etwa einem mittleren Bereich seiner Längs- und Quererstreckung wenigstes eine Öffnung aufweist, durch welche die Adern der Kabelseite geführt sind, um in einer ersten Gebrauchsstellung des Modulgehäuses an der zugeordneten Klemmleiste kontaktiert zu werden, wonach zur Kontaktierung der Rangierseite das Modulgehäuse in eine zweite Gebrauchsstellung überführbar ist.

Derartige Verbindungsmodule sind hinlänglich etwa aus der DE 33 11 459 A1, der DE 33 11 694 A1, der EP 01 80 000 A2 der DE 37 28 368 C1 oder der WO 2009/127315 bekannt und dienen in der Telekommunikations- und Datentechnik beispielsweise als Teile von Kabelverzweigern an Punkten, an welchen Verbindungen zwischen der netzseitigen Kabelseite und einer Endverbrauchereinrichtung, beispielsweise einer Telefonanlage, hergestellt werden. Innerhalb der Kabelverzweigungseinrichtung kann dann zwischen den ankommenden und abgehenden Kabelseiten sogenannt "rangiert" werden, d.h. ohne dass an den zu- und abgeführten Kabeln zunächst Veränderungen vorgenommen werden müssten, können im Prinzip beliebige Verbindungen von Doppeladern zwischen unterschiedlichen Modulen durch Verbinden der entsprechenden Klemmschlitze auf der Rangierseite des jeweiligen Moduls geschaltet werden.

Dabei bildet eine Mehrzahl von solchen nebeneinander angeordneten Verbindungsmodulen also jeweils Endverschlüsse für die Kabelenden der Doppeladern der Kabelseite. Eine steigende Anzahl von Anwendungen auf dem Telekommunikations- und Datensektor fordert die Unterbringung von immer mehr Leitungsanschlüssen bei zumindest gleichbleibendem oder sogar verringertem Platzangebot.

Mit Blick auf einen gewachsenen Anschlussbedarf konnte durch geeignete Maßnahmen bereits eine Verdichtung der Anschlüsse erreicht werden. Gleichzeitig ist durch die Anforderungen an die Ausfallsicherheit die Anordnung eines Überspannungsschutzes an den Verbindungsmodulen notwendig, welche aufgrund Platzbedarfs des entsprechenden Magazins mit räumlichen Einschränkungen einhergeht, welche drohen, zumindest den bereits erreichten Verdichtungsvorteil wieder zu verringern oder gar ganz zunichte zu machen. Überdies können Schaltarbeiten an den betreffenden Modulen aufgrund räumlicher Enge ein Entfernen des Überspannungsschutzes notwendig machen, wodurch die aktiven Komponenten des Moduls während der Arbeiten ungeschützt und mithin hoch gefährdet sind. Hierzu kennt man beispielsweise bereits die US2004/0233593 A1, bei welcher eine Erdungsschiene einer Erdungsvorrichtung an einer Verteileinrichtung angeordnete Verbindungsmodule stirnseitig übergreift und derart entweder das Beschalten erschwert ist oder hierfür die Erdungsvorrichtung unter Gefährdungserhöhung zuvor zu entfernen ist.

Es ist daher die Aufgabe der vorliegenden Erfindung, ein Verbindungsmodul zur Verfügung zu stellen, welches zum Erreichen einer hohen Beschaltungsdichte platzsparend angeordnet werden kann und bei welchem zur Durchführung von Schaltarbeiten das an dem Modul angeordnete Überspannungsmagazin nicht entfernt werden muss.

Diese Aufgabe wird gelöst durch ein Verbindungsmodul der eingangs genannten Art, bei dem im Bereich der Stirnfläche der Kabelseite ein Magazingehäuse eines Überspannungsteils mit einer Aussparung angeordnet ist, in welche die parallel zur Längserstreckung des Modulgehäuses in Richtung der Stirnseite fortgesetzte Ausnehmung mündet. Trotz Anordnung eines das Modul schützenden Überspannungsteils mit seinem Magazingehäuse an dem Verbindungsmodul können erfindungsgemäß demnach die Kabel von der Kabelseite, also etwa aus Richtung des Grundes einer Montagewanne, an das Modul herangeführt werden, ohne dass die Kabel an dem Rastermaß der Anordnung in einer bestimmten Höhe oder dem in Höhenrichtung gemessenen Modulabstand etwas änderten, so dass eine hohe Schaltdichte erreichbar ist. Auch die Kabelseite ist dabei mit dem herangeführten und durch die Ausnehmung gefädelten Kabel zunächst gut beschaltbar und nach der Beschaltung der Kabelklemmleiste kann aufgrund der Aussparung an dem Magazingehäuse der Überspannungsschutz einfach an dem Verbindungsmodul angeordnet werden und das Kabel kann sich anschließend in der zweiten Gebrauchsstellung des Moduls vorteilhaft etwa zwischen zwei miteinander in Quererstreckungsrichtung verbundenen Hälften des Modulgehäuses befinden. Bei einem einteiligen Magazingehäuse kann dessen Aussparung z.B. als nach einer Modulflachseite offene Vertiefung ausgebildet sein.

Vorteilhafte Ausführungen des erfindungsgemäßen Verbindungsmoduls, die eine einfache und sichere Kabelführung ermöglichen, können darin bestehen, dass die Aussparung einen der Ausnehmung ähnlichen Querschnitt aufweist und/oder Aussparung und Ausnehmung parallele Erstreckungsrichtungen aufweisen.

Eine andere platzsparende Ausführung des Verbindungsmoduls, die eine Beibehaltung oder gar Verkleinerung des Rastermaßes gestattet, zeichnet sich dadurch aus, dass das Modulgehäuse an einer seiner Flachseiten zumindest über einen Teil seiner Quererstreckung wenigstens einen Rücksprung bildet, der von einem Vorsprung eines einem Überspannungsschutzteil zugeordneten Magazingehäuses in dessen Gebrauchsstellung übergriffen ist. Mittels dieser Anordnung kann das Magazingehäuse des Überspannungsschutzteils derart an dem Modulgehäuse befestigt werden, dass es sich in der zweiten Gebrauchsstellung des Modulgehäuses im Bereich der einer Bedienperson abgewandten Stirnfläche des Moduls befindet, nämlich auf der Kabelseite, an welcher nur äußerst selten Manipulationen vorzunehmen sind. So kann die Bedienperson auf der ihr zugewandten Seite des Moduls, der Rangierseite, Änderungen vornehmen, ohne den Überspannungsschutz des Moduls entfernen zu müssen. Das Magazin des Überspannungsschutzteils kann beispielsweise direkt nach Kontaktierung der Kabelseite des Moduls an diesem angeordnet werden, oder aber sich bereits vormontiert an einem Montagegestell befinden, auf welches das Modul nach Kontaktierung der Kabelseite zur Einnahme der zweiten Gebrauchsstellung gesteckt wird. Im günstigsten Fall ist damit die Bedienperson mit dem Magazin des Überspannungsschutzteils gar nicht befasst.

Die in dem Modulgehäuse aufgenommenen Kontaktelemente können vorteilhafterweise etwa durch sogenannte LSA-Kontakte in 45°-Schrägstellung gebildet sein, mit welchen eine hohe Kontaktsicherheit gewährleistbar ist und die bei sehr guten Übertragungseigenschaften auch sehr montagefreundlich sind.

Bei einer platzsparenden, vorteilhaft an einem beispielsweise wannenartigen Montagegestell anordenbaren Ausführungsform des Verbindungsmoduls kann die Flachseite des Modulgehäuses mit der in Gebrauchsstellung des Magazingehäuses sich anschließenden Fläche im wesentlichen eine zusammenhängende ebene Fläche bilden. Im wesentlichen meint in diesem Zusammenhang, dass zwar ein geringer Überstand beim Anschluss der beiden Flächen aneinander entstehen kann, dieser aber keinen Einfluss auf das sogenannte Rastermaß haben sollte, der die Modulhöhe und somit die Anzahl von nebeneinander anordenbaren Modulen an dem betreffenden Montagegestell bestimmt.

In einer zweckmäßigen Weiterbildung des Verbindungsmoduls, die eine einfache Kontaktierung der Kontakte des Überspannungsteils gestattet, ist eine in etwa senkrecht zur Flachseite des Modulgehäuses angeordnete Rücksprungfläche mit Öffnungen versehen, mit welchen stirnseitig von dem Vorsprung des Magazingehäuses abstehende Kontakte in dessen Gebrauchsstellung in Eingriff stehen.

Eine vorteilhafte Ausbildung des Verbindungsmoduls, bei der das an die Kabelseite zugeführte, aus einem Bündel von Adern bestehende Kabel zuverlässig an dem Modulgehäuse gehalten und zumindest ein Stück weit zugentlastet ist, kann darin bestehen, dass das Modulgehäuse an der Klemmleiste der Kabelseite in deren mittlerem Bereich ein tunnelartiges oder U-förmiges Führungsteil aufweist, mittels dessen eine Mehrzahl von Adern des zugeführten Kabels gehalten und führbar ist.

In anderen vorteilhaften Ausführungen des Verbindungsmoduls, bei denen einerseits das Überspannungsteil gegebenenfalls einfacher an dem Modulgehäuse anordenbar ist oder aber die eine gute Unterbringung der zugeführten Kabel an die Modulgehäuse gestattet, ist das Magazingehäuse in mehreren Teilen vorgesehen, welche gegebenenfalls miteinander verbindbar sind. Zusammengehörige und/oder verbindbare Teile des Magazingehäuses können hierbei einen oder mehrere Rücksprünge an dem Modulgehäuse überdecken.

Eine zweckmäßige und sichere Ausbildung des Verbindungsmodul ist bei einer Konfiguration gegeben, bei welcher das Magazingehäuse derart an dem Modulgehäuse angeordnet ist, dass es in der zweiten Gebrauchsstellung von einer Bedienperson weg weist, also etwa in Richtung des Bodens einer Montagewanne, so dass es insbesondere einem unbeabsichtigten Zugriff entzogen ist.

Bevorzugt kann das Überspannungsteil hier aus einer Mehrzahl von Funkenstrecken, Gasableitern, verschiedenen Formen von Dioden, Varistoren oder dergleichen Schutzelementen bestehen.

Zur effektiven Ableitung von Spannungen kann eine Ausführungsform des Verbindungsmoduls mit einem Magazingehäuse versehen sein, bei welchem an wenigstens einer Schmalseite des Magazins einer oder mehrere Kontakte zur elektrischen Kontaktierung des Magazins mit einem insbesondere wannenartigen Träger der Module vorgesehen ist.

In einer die Montage der Verbindungsmodule an ihrem Träger vereinfachenden Variante kann es vorgesehen sein, dass das Magazingehäuse mit der Montagewanne oder dergleichen Befestigungseinrichtung verbindbar ist, um nachträglich mit dem kontaktierten Modul verbunden zu werden. Bei dieser Ausführung kann also das Magazingehäuse bereits in mit dem Träger kontaktierter Endstellung bzw. zweiter Montagestellung positioniert werden, während das zuzuordnende Modul an anderer Stelle des Trägers in erster Montagestellung zunächst kabelseitig kontaktiert wird, um anschließend in seiner zweite Montagestellung zum Rangieren, um 180° entlang der in Quererstreckungsrichtung verlaufenden Achse gedreht, an dem Träger und dem Magazingehäuse befestigt zu werden.

Weitere Vorteile des erfindungsgemäßen Verbindungsmoduls ergeben sich aus den Unteransprüchen sowie den Figuren nebst deren Beschreibung.

Die Erfindung wird nachstehend anhand von Ausführungsbeispielen in den Figuren der Zeichnung näher erläutert. In teilweise schematisierter Darstellung zeigen die
- Fig.1: eine perspektivische Seitenansicht des Verbindungsmoduls mit zugeführtem Kabel und Draufsicht auf das Magazingehäuse;
- Fig.2: eine weitere perspektivische Seitenansicht des Verbindungsmoduls aus der Fig.1 in gegenüber dieser leicht gekippter Darstellung;
- Fig.3: eine perspektivische Stirnansicht des Verbindungsmoduls aus den Fig.1 und 2, bei welcher dem Betrachter die Klemmleiste der Rangierseite des Verbindungsmodul zugewandt ist;
- Fig.4: eine weitere perspektivische Stirnansicht des Verbindungsmoduls der Fig.1 bis 3, bei welcher das Verbindungsmodul in der zweiten Montagestellung an einem wannenförmigen Träger angeordnet ist;
- Fig.5: eine perspektivische Seitenansicht eines dem Verbindungsmodul der Fig.1 bis 4 zugeordneten, in einem Magazingehäuse untergebrachten Überspannungsschutzteils.
- Fig.6: eine perspektivische Seitenansicht eines Verbindungsmoduls mit daran anzuordnendem Magazingehäuse des Überspannungsteils aus Richtung des Magazingehäuses ohne Kabel.

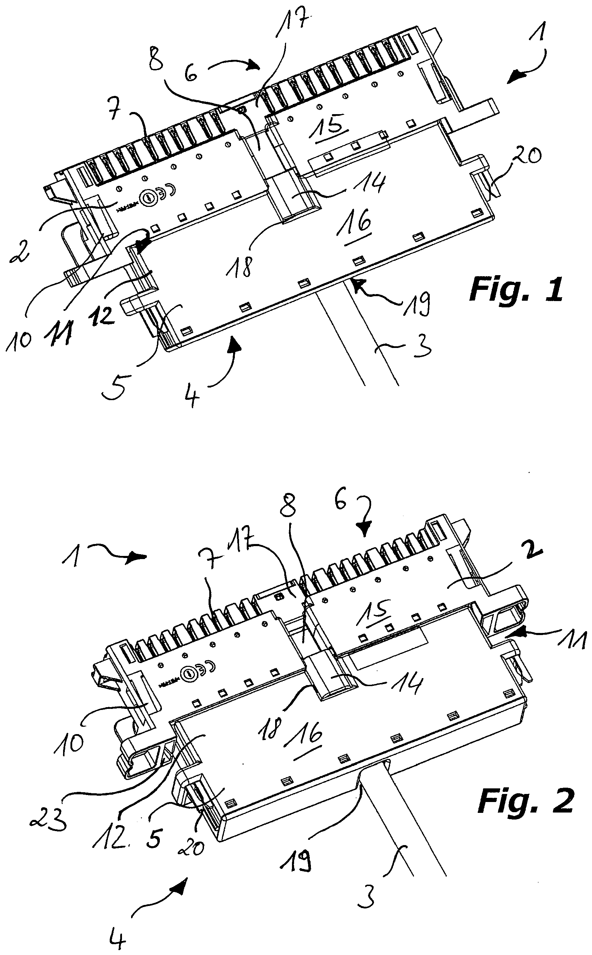

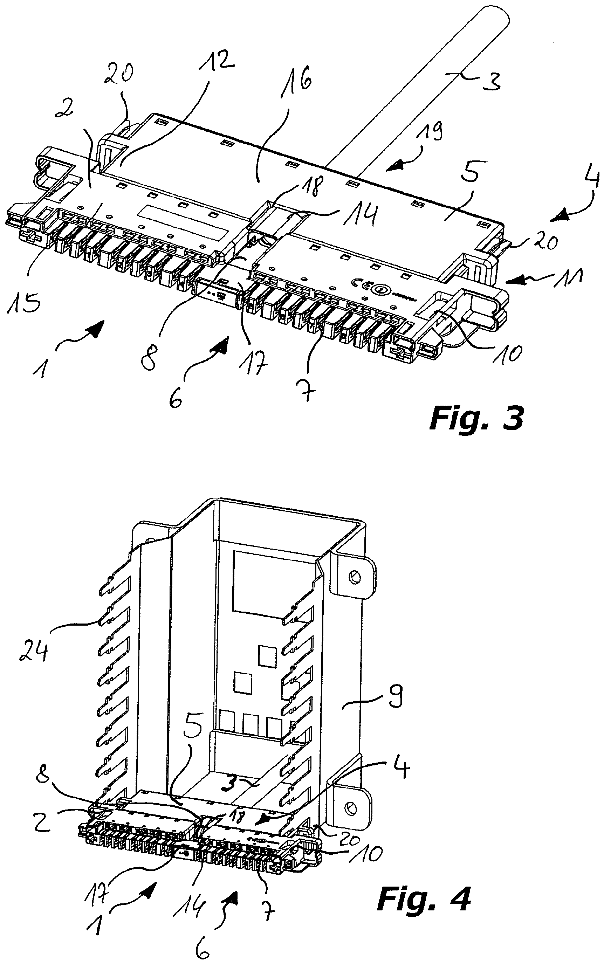

In den Fig.1 bis 4 ist ein im Ganzen mit 1 bezeichnetes Verbindungsmodul mit einem Modulgehäuse 2 dargestellt. Das Verbindungsmodul ist dabei mit in den Figuren nicht erkennbaren Kontaktelementen versehen, die in dem Modulgehäuse 2 aufgenommen sind. Diese Kontaktelemente kontaktieren in den Darstellungen der Figuren nicht sichtbare Aderenden von ebenfalls nicht sichtbaren Adern eines an das Modul 1 zugeführten Kabels 3 an der in den Fig. 1 und 2 unteren bzw. in den Fig.3 und 4 hinteren Kabelseite des Moduls mit aus Gründen der Übersichtlichkeit nicht gezeigten, an der oberen (Fig.1 und 2) bzw. vorderen (Fig.3 und 4) Rangierseite des Moduls zu kontaktierenden Aderenden von Rangieradern. In den Fig. 1 bis 4 sind die erwähnten Adern durch das Kabel 3 zugeführt und an der Kabelseite des Moduls kontaktiert, was durch das Magazingehäuse 5 des Überspannungsteils 4 des Verbindungsmoduls überdeckt ist. An den Stirnflächen des Moduls 1 sind Klemmleisten 6 gebildet, von welchen diejenige der Rangierseite des Moduls 1 für den Betrachter mit ihren Klemmschlitzen 7 sichtbar ist.

Die erwähnten Klemmschlitze 7 sind nebeneinander in Quererstreckungsrichtung des Moduls angeordnet, wobei das dargestellte Verbindungsmodul die Möglichkeit zur Verbindung von zehn Doppeladern bietet und hierzu zwei Gruppen zu je zehn Klemmschlitzen 7 zu je einer Seite einer Gehäuseausnehmung 8 in Quererstreckungsrichtung angeordnet sind. Die Ausnehmung 8 ist hierbei in einem mittleren Bereich der Längs- und Quererstreckung des Modulgehäuses vorgesehen und derart dimensioniert, dass zur Kontaktierung der Adern des Kabels 3 diese zunächst durch die Ausnehmung 8 geführt werden, wonach das Verbindungsmodul 1 anschließend an einer Montagewanne 9 in eine erste Montagestellung steckbar ist, aus diese aber ohne weiteres wieder gelöst bzw. abgenommen werden kann. Nach Kontaktierung der Kabelseite des Moduls 1 kann dieses an der Montagewanne 9 als Träger in einer zweiten, dauerhaften Gebrauchsstellung, wie in der Fig.4 dargestellt, angeordnet werden, wobei es in dieser durch ein Rastmittel 10 an Vorsprüngen 24 der Montagewanne 9 derart gehalten ist, dass die entsprechende Rastverbindung nur mittels eines Werkzeuges wieder lösbar ist. Die Vorsprünge 24 der Montagewanne 9 greifen dabei in Öffnungen 23 des Modulgehäuses 2.

Das Modulgehäuse 2 des Verbindungsmoduls 1 bildet an seiner dem Betrachter zugewandten Flachseite 15 in Querrichtung zumindest über einen Teil seiner Breite einen Rücksprung 11, der von einem Vorsprung 12 des dem Überspannungsschutzteil 4 zugeordneten Magazingehäuses 5 in dessen Gebrauchsstellung übergriffen ist, wodurch das Überspannungsteil in platzsparender Weise an dem Modulgehäuse 2 angeordnet ist und in Höhenrichtung des Moduls (in etwa aus der Betrachtungsebene de Fig.1 und 2 heraus) keinen Zusatzbeitrag leistet.

Ebenso ist in den Fig.1 bis 4 zu erkennen, dass der rückspringende Anteil der Flachseite 15 des Modulgehäuses 2 vollflächig von benachbart gegenüberliegenden Flächen des Magazingehäuses 5 in dessen Gebrauchsstellung überdeckt ist. Hierbei ergänzt das Magazingehäuse 5 die Form Modulgehäuses 2 des Verbindungsmoduls 1 zu einer in etwa quaderförmigen Grundform, wobei insbesondere die Flachseite 15 des Modulgehäuses 2 mit der in Gebrauchsstellung des Magazingehäuses 5 sich anschließenden Fläche 16 eine zusammenhängende, ebene Fläche bildet, so dass ein etwa an einer Montagewanne angeordnetes Verbindungsmodul 1 durch ein benachbartes Verbindungsmodul 1 keinen Einschränkungen hinsichtlich der Montagefreundlichkeit unterliegt.

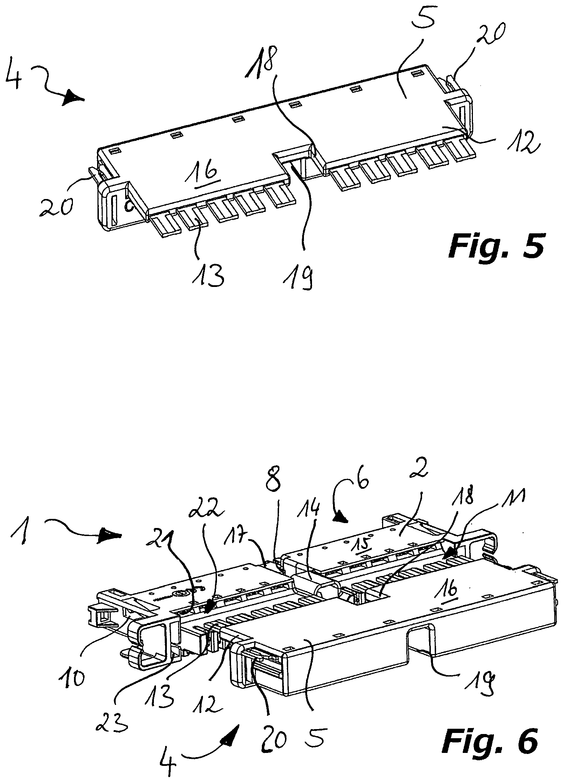

Am besten der Fig.5 zu entnehmen ist der Umstand, dass eine in etwa senkrecht zur Flachseite 15 des Modulgehäuses 2 angeordnete Rücksprungfläche zur Kontaktierung des Moduls 1 mit dem Überspannungsteil 4 mit Öffnungen versehen sein muss, so dass die stirnseitig von dem Vorsprung 12 des Magazingehäuses 5 abstehenden Kontakte 13 in dessen Gebrauchsstellung mit diesen Öffnungen in Eingriff stehen können und sich die eben erwähnten zusammenhängende Fläche der Flachseite 15 des Moduls 1 mit der Fläche 16 des Magazingehäuses ergeben kann.

Wieder die Fig.1 bis 4 betrachtend ist weiter ersichtlich, dass das Modulgehäuse 2 an der für den Betrachter durch das Magazingehäuse 5 verdeckten Klemmleiste der Kabelseite in deren mittleren Bereich ein tunnelartiges Führungsteils 14 mit abgerundetem Querschnitt aufweist, mittels dessen eine Mehrzahl von Adern des zugeführten Kabels gehalten und führbar ist, wobei auf die Darstellung der Adern aus Gründen der Übersichtlichkeit verzichtet wurde. Gleichzeitig erkennt man, dass das Magazingehäuse 5 in Quererstreckungsrichtung des Modulgehäuses 2 in zwei verbundene Abschnitte unterteilt ist, welche durch einen Verbindungssteg 17 miteinander verbunden sind, der zur Bezeichnung oder Unterscheidung des Moduls 1 beispielsweise an seiner in den Fig.3 und 4 dem Betrachter zugewandten Stirnseite farblich codiert sein kann.

Den Fig.1 bis 6 ist überdies entnehmbar, dass die Fläche 16 des Magazingehäuses 5, die sich an die Flachseite 15 des Modulgehäuses 2 anschließt, mit einer Ausnehmung 18 versehen ist, die das Führungsteil 14 von drei Seiten einfasst und weiter, dass die Ausnehmung 8 des Modulgehäuses 2 in eine u-förmige, dem Betrachter jeweils abgewandte Aussparung 19 des Magazingehäuses 5 fortgesetzt ist. Folglich ist im Bereich der Stirnfläche der Kabelseite das Magazingehäuse 5 des Überspannungsteils 4 mit der Aussparung 19 angeordnet, in welche die parallel zur Längserstreckung des Modulgehäuses 2 in Richtung der Stirnseite fortgesetzte Ausnehmung 8 mündet. Schließlich ist den Zeichnungsfiguren zu entnehmen, dass das Magazingehäuse 5 an seinen Schmalseiten jeweils mit einem zweischenkligen Kontaktschlitz 20 versehen ist, um mit der Montagewanne 9, in seiner an dem Verbindungsmodul 1 vorgesehenen Gebrauchsstellung angeordnet und über die Kontakte 13 verbunden, elektrisch verbunden zu werden.

In der Fig.6 sind ein Verbindungsmodul 1 mit dem Modulgehäuse 2 sowie dem daran anzuordnenden Magazingehäuse 19 des Überspannungsteils 4 unmittelbar vor ihrer Verbindung zu erkennen, wobei in der Fig.6 auf die Darstellung des Kabels 3 verzichtet wurde. Gut zu erkennen sind jedoch die Kontakte 13 des Überspannungsteils 4, welche zur Kontaktierung in die Öffnungen 21 an der Rücksprungfläche 22 des Modulgehäuses 2 eingreifen. Daneben ist anhand der Fig.6 besonders gut ersichtlich, dass das Modulgehäuse 2 an einer seiner Flachseiten 15 über seine Quererstreckung einen Rücksprung 11 bildet, der von dem Vorsprung 12 des dem Überspannungsschutzteil 4 zugeordneten Magazingehäuses 5 in dessen Gebrauchsstellung übergriffen ist.

Die vorstehend beschriebene Erfindung betrifft demnach ein Verbindungsmodul 1 mit Kontaktelementen, welche bei Kontaktierung von Adern einer Kabel- und einer Rangierseite des Moduls 1 an dessen beabstandeten, einander gegenüberliegenden Stirnflächen Aderenden der Adern verbinden, wobei die Kontaktelemente in einem Modulgehäuse 2 aufgenommen sind und in Richtung der Quererstreckung des Moduls 1 nebeneinander angeordnete, je einer Seite eines Kontaktelements zugeordnete Klemmschlitze 7 eine Klemmleiste 6 bilden, in welche Klemmschlitze 7 die Aderenden zur Kontaktierung einführbar sind. Das Modulgehäuse 2 weist in etwa einem mittleren Bereich seiner Längs- und Quererstreckung wenigstens eine Ausnehmung 8 auf, durch welche die Adern der Kabelseite geführt sind, um in einer ersten Gebrauchsstellung des Modulgehäuses 2 an der zugeordneten Klemmleiste 6 kontaktiert zu werden, wonach zur Kontaktierung der Klemmleiste 6 der Rangierseite das Modulgehäuse 2 in eine zweite Gebrauchsstellung überführbar ist. Um ein Verbindungsmodul 1 zur Verfügung zu haben, welches zum Erreichen einer hohen Beschaltungsdichte platzsparend angeordnet werden kann und bei welchem zur Durchführung von Schaltarbeiten das an dem Modul angeordnete Überspannungsmagazin nicht entfernt werden muss, ist im Bereich der Stirnfläche der Kabelseite ein Magazingehäuse 5 eines Überspannungsteils 4 mit einer Aussparung 19 angeordnet ist, in welche die parallel zur Längserstreckung des Modulgehäuses 2 in Richtung der Stirnseite fortgesetzte Ausnehmung 8 mündet

## Patentansprüche

1. Verbindungsmodul (1) für die Fernmelde- und Datentechnik mit Kontaktelementen, welche bei Kontaktierung von Adern einer Kabel- und einer Rangierseite des Moduls an dessen beabstandeten, einander gegenüberliegenden Stirnflächen Aderenden der Adern verbinden, wobei die Kontaktelemente in einem Modulgehäuse (2) aufgenommen sind und in Richtung der Quererstreckung des Moduls nebeneinander angeordnete, je einer Seite eines Kontaktelements zugeordnete Klemmschlitze (7) eine Klemmleiste (6) bilden, in welche Klemmschlitze (7) die Aderenden zur Kontaktierung einführbar sind, wobei das Modulgehäuse in etwa einem mittleren Bereich seiner Längs- und Quererstreckung wenigstes eine Ausnehmung (8) aufweist, durch welche die Adern der Kabelseite geführt sind, um in einer ersten Gebrauchsstellung des Modulgehäuses an der zugeordneten Klemmleiste kontaktiert zu werden, wonach zur Kontaktierung der Rangierseite das Modulgehäuse in eine zweite Gebrauchsstellung überführbar ist, **dadurch gekennzeichnet, dass** im Bereich der Stirnfläche der Kabelseite ein Magazingehäuse (5) eines Überspannungsteils (4) mit einer Aussparung (19) angeordnet ist, in welche die parallel zur Längserstreckung des Modulgehäuses (2) in Richtung der Stirnseite fortgesetzte Ausnehmung (8) mündet.

2. Verbindungsmodul nach Anspruch 1, **dadurch gekennzeichnet, dass** die Aussparung (19) einen der Ausnehmung (8) ähnlichen Querschnitt aufweist und/oder Aussparung (19) und Ausnehmung (8) parallele Erstreckungsrichtungen aufweisen.

3. Verbindungsmodul nach Anspruch 1 oder 2, **dadurch gekennzeichnet, dass** das Modulgehäuse (2) an einer seiner Flachseiten (15) zumindest über einen Teil seiner Quererstreckung wenigstens einen Rücksprung (11) bildet, der von einem Vorsprung (12) des Überspannungsschutzteils (4) zugeordneten Magazingehäuses (5) in dessen Gebrauchsstellung übergriffen ist.

4. Verbindungsmodul nach einem der Ansprüche 1 bis 3, **dadurch gekennzeichnet, dass** die Flachseite (15) des Modulgehäuses (2) mit der in Gebrauchsstellung des Magazingehäuses (5) sich anschließenden Fläche (16) im wesentlichen eine zusammenhängende, ebene Fläche bildet.

5. Verbindungsmodul nach einem der Ansprüche 1 bis 4, **dadurch gekennzeichnet, dass** eine in etwa senkrecht zur Flachseite (15) des Modulgehäuses (2) angeordnete Rücksprungfläche (22) mit Öffnungen (21) versehen ist, mit welchen stirnseitig von dem Vorsprung (12) des Magazingehäuses (5) abstehende Kontakte (13) in dessen Gebrauchsstellung in Eingriff stehen.

6. Verbindungsmodul nach einem der Ansprüche 1 bis 5, **dadurch gekennzeichnet, dass** das Modulgehäuse (2) an der Klemmleiste der Kabelseite in deren mittlerem Bereich ein tunnelartiges oder U-förmiges Führungsteil (14) aufweist, mittels dessen eine Mehrzahl von Adern des zugeführten Kabels (3) gehalten und führbar ist.

7. Verbindungsmodul nach einem der Ansprüche 1 bis 6, **dadurch gekennzeichnet, dass** das Magazingehäuse (5) derart an dem Modulgehäuse (2) angeordnet ist, dass es in der zweiten Gebrauchsstellung von einer Bedienperson weg weist.

8. Verbindungsmodul nach einem der Ansprüche 1 bis 7, **dadurch gekennzeichnet, dass** das Überspannungsteil eine Mehrzahl von Funkenstrecken, Gasableitern, verschiedenen Formen von Dioden, Varistoren oder dergleichen Schutzelementen aufweist.

9. Verbindungsmodul nach einem der vorhergehenden Ansprüche, **dadurch gekennzeichnet, dass** an wenigstens einer Schmalseite des Magazins einer oder mehrere Kontakte (20) zur elektrischen Kontaktierung des Magazins mit einem Träger (9) der Module, insbesondere einer Montagewanne, vorgesehen ist.

10. Verbindungsmodul nach einem der vorhergehenden Ansprüche, **dadurch gekennzeichnet, dass** das Magazingehäuse (5) zunächst mit dem Träger (9) des Verbindungsmoduls (1) verbindbar und an diesem gegebenenfalls festlegbar ist, um nachträglich mit dem mit Adern der Kabelseite kontaktierten Modul (1) verbunden zu werden.

## Claims

1. Connecting module (1) for telecommunications and data technology having contact elements which, upon contacting of cores of a cable side and of a cross-connection side of the module, at the spaced-apart, mutually opposing end surfaces thereof, connect core ends of the cores, wherein the contact elements are received in a module housing (2), and clamping slits (7), which are disposed next to one another in the direction of the transverse extension of the module and are each allocated to one side of a contact element, form a clamping strip (6), into which clamping slits (7) the core ends can be introduced for contacting purposes, wherein the module housing in approximately a middle region of its longitudinal and transverse extension, has at least one aperture (8) through which the cores of the cable side are guided in order to be contacted on the associated clamping strip in a first position of use of the module housing, whereupon, for contact with the cross-connection side, the module housing can be transferred to a second position of use, **characterised in that** in the region of the end surface of the cable side, a magazine housing (5) of an overvoltage part (4) is disposed with an opening (19) into which issues the aperture (8) continuing in parallel with the longitudinal extension of the module housing (2) in the direction of the end face.

2. Connecting module as claimed in claim 1, **characterised in that** the opening (19) has a cross-section similar to the aperture (8) and/or opening (19) und aperture (8) extend in parallel directions.

3. Connecting module as claimed in claim 1 or 2, **characterised in that** the module housing (2), on one of its flat sides (15), forms, at least over a part of its transverse extension, at least one recess (11) which is overlapped by a protrusion (12) of the overvoltage protection part (4) of the associated magazine housing (5) in the position of use thereof.

4. Connecting module as claimed in any one of claims 1 to 3, **characterised in that** the flat side (15) of the module housing (2) substantially forms a continuous planar surface with the surface (16) adjoining it in the position of use of the magazine housing (5).

5. Connecting module as claimed in any one of claims 1 to 4, **characterised in that** a recess surface (22) disposed approximately perpendicular to the flat side (15) of the module housing (2) is provided with holes (21) which are engaged by contacts (13), protruding at the end face from the protrusion (12) of the magazine housing (5), in the position of use thereof.

6. Connecting module as claimed in any one of claims 1 to 5, **characterised in that** the module housing (2) has a tunnel-like or U-shaped guide part (14) on the clamping strip of the cable side in the central region thereof, by means of which guide part a plurality of cores of the supplied cable (3) can be held and guided.

7. Connecting module as claimed in any one of claims 1 to 6, **characterised in that** the magazine housing (5) is disposed on the module housing (2) in such a way that it points away from an operator in the second position of use.

8. Connecting module as claimed in any one of claims 1 to 7, **characterised in that** the overvoltage part has a plurality of dischargers, gas discharge protectors, different forms of diodes, varistors or similar protective elements.

9. Connecting module as claimed in any one of the preceding claims, **characterised in that**, on at least one narrow side of the magazine, one or more contacts (20) for electrical contacting of the magazine with a carrier (9) of the modules, in particular of a backmount frame, is provided.

10. Connecting module as claimed in any one of the preceding claims, **characterised in that** the magazine housing (5) can first be connected to the carrier (9) of the connecting module (1) and can, if necessary, also be fixed thereto in order subsequently to be connected to the module (1) contacted with cores of the cable side.

## Revendications

1. Module de raccordement (1) pour la technique des télécommunications et de l'informatique avec des éléments de contact, qui lors d'une mise en contact de fils d'un côté de câble et d'un côté de connexion du module sur ses faces frontales espacées opposées l'une à l'autre relient des extrémités de fils des fils, dans lequel les éléments de contact sont logés dans un boîtier de module (2) et des fentes de bornier (7) disposées l'une à côté de l'autre dans la direction de l'extension transversale du module et respectivement associées à un côté d'un élément de contact forment une réglette de bornier (6), fentes de bornier (7) dans lesquelles les extrémités de fils peuvent être introduites en vue de la mise en contact, dans lequel le module de boîtier présente dans une région sensiblement moyenne de son extension longitudinale et transversale au moins un évidement (8), à travers lequel les fils du côté de câble sont menés, afin d'être mis en contact dans une première position d'utilisation du boîtier de module sur la réglette de bornier associée, puis le module de boîtier peut être déplacé dans une deuxième position d'utilisation en vue de la mise en contact du côté de connexion, **caractérisé en ce qu'**un boîtier de magasin (5) d'une partie de recouvrement (4) est disposé dans la région de la face frontale du côté de câble avec une découpe (19), dans laquelle débouche l'évidement (8) prolongé en direction de la face frontale parallèlement à l'extension longitudinale du boîtier de module (2).

2. Module de raccordement selon la revendication 1, **caractérisé en ce que** la découpe (19) présente une section transversale analogue à l'évidement (8) et/ou la découpe (19) et l'évidement (8) présentent des directions d'extension parallèles.

3. Module de raccordement selon la revendication 1 ou 2, **caractérisé en ce que** le boîtier de module (2) forme sur un de ses côtés plats (15), au moins sur une partie de son extension transversale, au moins un retrait (11), qui est recouvert par une saillie (12) de la partie protectrice de recouvrement (4) du boîtier de magasin associé (5) dans la position d'utilisation de celui-ci.

4. Module de raccordement selon l'une quelconque des revendications 1 à 3, **caractérisé en ce que** le côté plat (15) du boîtier de module (2) forme essentiellement une face plane continue avec la face adjacente (16) dans la position d'utilisation du boîtier de magasin (5).

5. Module de raccordement selon l'une quelconque des revendications 1 à 4, **caractérisé en ce qu'**une face de retrait (22) disposée sensiblement perpendiculairement au côté plat (15) du boîtier de module (2) est munie d'ouvertures (21), avec lesquelles des contacts (13) saillants frontalement de la saillie (12) du boîtier de magasin (5) sont en prise dans la position d'utilisation de celui-là.

6. Module de raccordement selon l'une quelconque des revendications 1 à 5, **caractérisé en ce que** le boîtier de module (2) présente sur la réglette de bornier du côté de câble, dans la région moyenne de celui-là, une partie de guidage en forme de tunnel ou en forme de U (14), au moyen de laquelle une multiplicité de fils du câble amené (3) sont maintenus et peuvent être guidés.

7. Module de raccordement selon l'une quelconque des revendications 1 à 6, **caractérisé en ce que** le boîtier de magasin (5) est disposé sur le boîtier de module (2), de telle manière qu'il soit orienté à l'opposé d'un opérateur dans la deuxième position d'utilisation.

8. Module de raccordement selon l'une quelconque des revendications 1 à 7, **caractérisé en ce que** la partie de recouvrement présente une multiplicité de dérivateurs de surtension, de tubes à décharge à gaz, de différentes formes de diodes, de varistors ou d'éléments de protection similaires.

9. Module de raccordement selon l'une quelconque des revendications précédentes, **caractérisé en ce qu'**il est prévu sur au moins un côté étroit du magasin un ou plusieurs contact(s) (20) pour la mise en contact électrique du magasin avec un support (9) des modules, en particulier une cuvette de montage.

10. Module de raccordement selon l'une quelconque des revendications précédentes, **caractérisé en ce que** le boîtier de magasin (5) peut d'abord être relié au support (9) du module de raccordement (1) et être éventuellement fixé à celui-là, afin d'être relié ultérieurement au module (1) en contact avec des fils du côté de câble.
